# EUROPÄISCHE PATENTANMELDUNG

(11) **EP 2 124 032 A2**
(43) Veröffentlichungstag der Anmeldung: **25.11.2009**
(21) Anmeldenummer: 09006559.0
(22) Anmeldetag: 15.05.2009
(51) Int. Cl.: G01M 13/04

(54) **Prüfen des Rotationsverhaltens einer Walze**

(30) Priorität: 20.05.2008 DE 102008024373
(71) Anmelder: Hauni Maschinenbau AG, 21033 Hamburg (DE)
(72) Erfinder: Horn, Sönke, 21502 Geesthacht (DE); Peisker, Jan, 21516 Schulendorf (DE); Tönsmann, Andreas, 21465 Wentorf (DE); Meyer, Ralf, 29581 Gerdau / Bohlsen (DE); Wolff, Stephan, 21509 Glinde (DE); De Boer, Jann, 20359 Hamburg (DE)
(74) Vertreter: Seemann, Ralph

(57) **Zusammenfassung**

Die Erfindung betrifft ein Verfahren zum Prüfen des Rotationsverhaltens einer Walze (21, 22, 26, 27, 41, 42, 44, 46, 49) einer Maschine der Tabak verarbeitenden Industrie. Die Erfindung betrifft ferner eine Walzenvorrichtung (55) einer Maschine der Tabak verarbeitenden Industrie.

Das erfindungsgemäße Verfahren zeichnet sich dadurch aus, dass während der Rotation der Walze (21, 22, 26, 27, 41, 42, 44, 46, 49) über einen vorgebbaren Zeitraum kontinuierlich oder in vorbestimmten Zeitabschnitten eine zeitabhängige physikalische Größe (n, 12) ermittelt wird und mit wenigstens einem Referenzwert (11) verglichen wird, wobei in Abhängigkeit des Vergleichs der Betriebszustand der Walze (21, 22, 26, 27, 41, 42, 44, 46, 49) für den Betrieb der Maschine bestimmt wird.

Die erfindungsgemäße Walzenvorrichtung zeichnet sich dadurch aus, dass zur Prüfung des Rotationsverhaltens einer Walze (21, 22, 26, 27, 41, 42, 44, 46, 49) der Walzenvorrichtung (55) eine die Walze antreibende Vorrichtung (50, 56, 57) vorgesehen ist, wobei eine Messvorrichtung (58, 59, 60) vorgesehen ist, die während der Rotation der Walze (21, 22, 26, 27, 41, 42, 44, 46, 49) über einen vorgebbaren Zeitraum kontinuierlich oder in vorbestimmten Zeitabschnitten eine zeitabhängige physikalische Größe (n, 12) ermittelt, wobei aufgrund des ermittelten Werts (n, 12) oder der ermittelten Werte (n,12) ein Betriebszustand, insbesondere ein Drehwiderstand, der Walze (21, 22, 26, 27, 41, 42, 44, 46, 49) bestimmt wird.

## Beschreibung

Die Erfindung betrifft ein Verfahren zum Prüfen des Rotationsverhaltens einer Walze einer Maschine der Tabak verarbeitenden Industrie sowie eine Walzenvorrichtung einer Maschine der Tabak verarbeitenden Industrie.

Lager von Walzen, insbesondere von Bremswalzen, insbesondere von Filtermaterialaufbereitungsmaschinen der Tabak verarbeitenden Industrie, unterliegen einem Verschleiß, der schleichend ist und über lange Sicht zu Einbußen in der Produktqualität führen kann. So kann beispielsweise ein zu großer Verschleiß zu einem höheren Drehwiderstand führen. Wenn der Drehwiderstand von Bremswalzen in einer Reckstrecke von einer Filtertowaufbereitungsvorrichtung erhöht ist, führt dieses zu einer verstärkten Reckung des Filtertows.

Es ist Aufgabe der vorliegenden Erfindung, ein entsprechendes Verfahren und eine entsprechende Vorrichtung anzugeben, mittels derer es möglich ist, rechtzeitig vor einer Produktbeeinträchtigung einen entsprechenden Verschleiß der Lager von Walzen zu erkennen.

Gelöst wird diese Aufgabe durch ein Verfahren zum Prüfen des Rotationsverhaltens einer Walze einer Maschine der Tabak verarbeitenden Industrie, wobei während der Rotation der Walze über einen vorgebbaren Zeitraum kontinuierlich oder in vorbestimmten Zeitabschnitten eine zeitabhängige physikalische Größe ermittelt wird und mit wenigstens einem Referenzwert verglichen wird, wobei in Abhängigkeit des Vergleichs der Betriebszustand der Walze für den Betrieb der Maschine bestimmt wird.

Es ist erfindungsgemäß erkannt worden, dass eine zeitabhängige physikalische Größe, die ein Maß für den Drehwiderstand einer entsprechenden Walze ist, bzw. eine zeitabhängige physikalische Größe, mit der Rückschlüsse auf den Drehwiderstand getroffen werden können, effizient einen zu großen Verschleiß erkennbar macht, der insbesondere zu schlechteren Produktqualitäten führen kann. Unter Betriebszustand wird im Rahmen der Erfindung insbesondere die Eignung für den Betrieb einer Maschine der Tabak verarbeitenden Industrie, insbesondere einer Filteraufbereitungsmaschine der Tabak verarbeitenden Industrie, verstanden, wobei insbesondere unterschieden wird, ob die Walze freilaufend ist bzw. nicht freilaufend. Insbesondere wird der Drehwiderstand einer nicht angetriebenen Walze insbesondere außerhalb des Produktionsbetriebs der Maschine bestimmt. Vorzugsweise wird der Betriebszustand der Walze automatisch, insbesondere außerhalb des Produktionsbetriebs der Maschine, bestimmt.

Im Rahmen der Erfindung ist unter dem Begriff Walze auch eine Rolle oder Trommel zu verstehen.

Besonders bevorzugt ist es, wenn die physikalische Größe eine positive Beschleunigung, insbesondere beim Hochfahren der Walze auf eine vorgebbare Rotationsgeschwindigkeit, eine negative Beschleunigung beim Abbremsen der Walze und/oder ein Leistungseintrag eines die Walze antreibenden Organs beim Beschleunigen auf eine vorgebbare Drehzahl oder beim Aufrechterhalten einer vorgebbaren Drehzahl ist.

Besonders bevorzugt ist die Variante, dass die negative Beschleunigung beim Abbremsen der Walze als physikalische Größe dient, insbesondere dann, wenn die Walze nach einem Antreiben auf eine Rotationsgeschwindigkeit vom Antrieb entkoppelt wird, so dass diese an sich frei rotieren würde und im Wesentlichen aufgrund der Reibung im Lager abgebremst wird. Hierbei kann die Reibung auch durch Verunreinigungen am oder im Lager entstehen.

Die physikalische Größe kann auch die Zeit sein, die verstreicht, um von einer vorgebbaren ersten Rotationsgeschwindigkeit auf eine vorgebbare zweite Rotationsgeschwindigkeit abzubremsen. Hierzu wird vorzugsweise die Walze durch einen Luftstrom, insbesondere zunächst, in Rotation versetzt. Hierdurch können Fehler durch das Abkoppeln eines motorischen bzw. elektrischen Antriebs vermieden werden.

Insbesondere vorzugweise wirkt der Luftstrom auf, insbesondere an einer Stirnseite der Walze an- oder eingebrachte, Luftwiderstandselemente, insbesondere Einfräsungen oder Flügelelemente. Die Einfräsungen können auch als Propellerelement aufgefasst werden. Vorzugsweise sind die Einfräsungen asymmetrisch, so dass diese segelartig wirken. Die Flügel sind vorzugsweise auch asymmetrisch dergestalt, dass die Luvseite einen kürzeren Weg vom Anfang der Stirnseite des Flügels zur Endseite des Flügels aufweist als die Leeseite. Vorzugsweise ist hierbei das Segel mit einem Bauch versehen, der bei einem Drittel von der Stirnseite der Flügel am größten ist.

Vorzugsweise ist die Walze eine, insbesondere freidrehende, Bremswalze, insbesondere einer Filtermaterialaufbereitungsvorrichtung. Vorzugsweise ist die Walze in einer Filtertowaufbereitungsvorrichtung angeordnet.

Die Aufgabe wird ferner durch eine Walzenvorrichtung einer Maschine der Tabak verarbeitenden Industrie gelöst, wobei zur Prüfung des Rotationsverhaltens einer Walze der Walzenvorrichtung eine die Walze antreibende Vorrichtung vorgesehen ist und wobei eine Messvorrichtung vorgesehen ist, die während der Rotation der Walze über einen vorgebbaren Zeitraum kontinuierlich oder in vorbestimmten Zeitabschnitten eine zeitabhängige physikalische Größe ermittelt, wobei aufgrund des ermittelten Werts oder der ermittelten Werte ein Betriebszustand, insbesondere ein Drehwiderstand, der Walze bestimmt wird.

Vorzugsweise richtet die die Walze antreibende Vorrichtung einen Luftstrom auf die Walze, insbesondere auf eine Stirnseite der Walze. Vorzugsweise ist zur Ermittlung der zeitabhängigen physikalischen Größe ein Drehzahlsensor oder ein Beschleunigungssensor vorgesehen. Der Drehzahlsensor kann beispielsweise ein Initiator sein und mit einem oder zwei oder mehreren an der Stirnseite oder in der Stirnseite angebrachten Stahlstiften kommunizieren, d.h. das Vorbeibewegen der Stahlstifte an dem Sensor bzw. Initiator registrieren, wodurch die Drehzahl bzw. Rotationsgeschwindigkeit der Walze bestimmt werden kann.

Vorzugsweise ist eine Walze zur Verwendung in einer erfindungsgemäßen Walzenvorrichtung mit wenigstens einem Luftwiderstandselement versehen. Vorzugsweise ist das Luftwiderstandselement als Flügel oder als, insbesondere asymmetrische, Einfräsung ausgebildet.

In einer besonders bevorzugten Ausführungsform ist die Einfräsung auf einer Stirnseite der Walze oder einer Stirnseite eines mit der Walze verbindbaren Rings angeordnet. Bei der Einfräsung handelt es sich vorzugsweise um eine schräg eingebrachte Einbuchtung. Vorzugsweise ist eine Mehrzahl von Luftwiderstandselementen, wie Einfräsungen oder Flügelelemente, vorgesehen.

Vorzugsweise ist ein Signalgeber, insbesondere auf der Stirnseite der Walze oder des mit der Walze verbindbaren Rings, vorgesehen. Dieser dient zur Drehzahlmessung bzw. Beschleunigungsmessung.

Vorzugsweise ist die Walze eine Bremswalze, insbesondere eines Bremswalzenpaars, einer Filtermaterialaufbereitungsvorrichtung. Bei der Filtermaterialaufbereitungsvorrichtung handelt es sich vorzugsweise um eine Filtertowaufbereitungsvorrichtung. Die Walze ist insbesondere Bestandteil einer Reckvorrichtung einer Filtertowaufbereitungsvorrichtung. Insbesondere vorzugsweise ist eine entsprechende nicht angetriebene Walze erfindungsgemäß ausgebildet. Vorzugsweise ist ein an einem drehbaren Teil einer erfindungsgemäßen Walze anbringbarer Ring mit wenigstens einem Luftwiderstandselement, insbesondere zum Versetzen der Walze in eine Rotation mittels eines Luftstroms, versehen.

Vorzugsweise ist ein an die Halterung einer erfindungsgemäßen Walze anbringbarer Ring mit einem Druckluftanschluss versehen, der insbesondere mit einem Ringspalt, der im Ring angeordnet ist, kommuniziert. Vorzugsweise ist auch ein entsprechender Anschluss für einen Sensor vorgesehen. Die Halterung ist vorzugsweise drehstationär.

Die Erfindung wird nachstehend anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Seitenansicht eines Teils einer Filtertowaufbereitungsvorrichtung gemäß dem Stand der Technik,
- Fig. 2: eine schematische erfindungsgemäße Walzenvorrichtung in dreidimensionaler Darstellung,
- Fig. 3: eine entsprechende erfindungsgemäße Walzenvorrichtung aus Fig. 2, bei der Teile zur besseren Veranschaulichung entfernt sind,
- Fig. 4: die erfindungsgemäße Walzenvorrichtung aus Fig. 3, wobei noch ein weiteres Teil zur Veranschaulichung entfernt wurde,
- Fig. 5: ein schematisches Diagramm der Drehzahl über der Zeit,
- Fig. 6: eine schematische dreidimensionale Darstellung wesentlicher Teile der erfindungsgemäßen Walzenvorrichtung,
- Fig. 7: eine schematische dreidimensionale Darstellung einer weiteren erfindungsgemäßen Ausgestaltung einer Wal- zenvorrichtung und
- Fig. 8: eine schematische dreidimensionale Darstellung eines Teils einer weiteren erfindungsgemäßen Walze.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

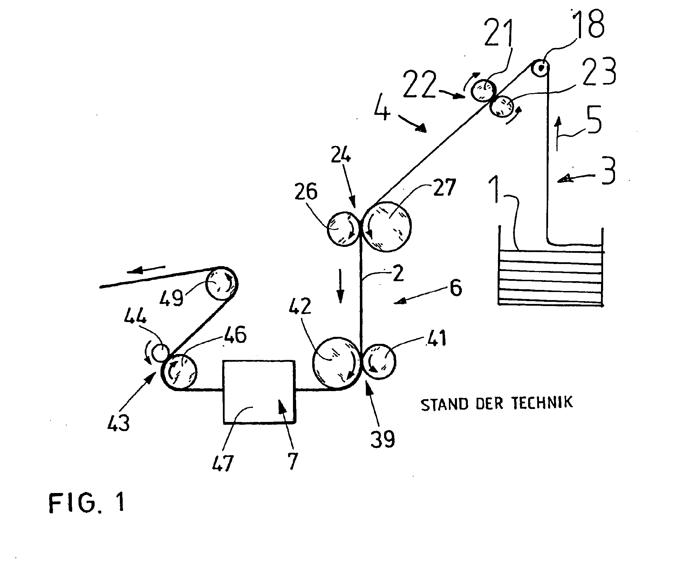

Fig. 1 zeigt schematisch einen Teil einer Filtertowaufbereitungsvorrichtung des Standes der Technik aus beispielsweise EP 1 559 333 A2. Der Inhalt dieser Patentanmeldung soll vollumfänglich in die vorliegende Patentanmeldung ausdrücklich aufgenommen sein.

Es ist in Fig. 1 ein Ausschnitt aus einer Aufbereitungsanordnung gemäß dem Stand der Technik schematisch dargestellt. Von einem Ballen 1 wird ein Streifen 2 aus Filtertow, z.B. Zelluloseacetat, abgezogen und durch eine Abzugsstrecke 3 in eine Vorreckstrecke 4 geführt.

Die Abzugstrecke 3, in der der Filtermaterialstreifen 2 entlang des Pfeiles 5 geführt wird, weist eine oder mehrere Ausbreiterdüsen, die nicht dargestellt sind, auf, die Druckluft von einer Druckluftquelle erhalten. Die Druckluft dient zur Ausbreitung des in Richtung des Pfeiles 5 geförderten Filtertowstreifens bzw. -gewebes im Abschnitt 3. Über wenigstens eine Umlenkrolle 18 gelangt der Filtertowstreifen 2 in die Vorreckstrecke 4, die einerseits von einem Walzenpaar 21 mit den Walzen 22, 23, andererseits von einem Walzenpaar 24 mit wenigstens einer motorisch angetriebenen Walze 26, 27 begrenzt ist. Die Walzen 22, 23, auch als Bremswalzen bezeichnet, werden vom Filtertowstreifen 2 geschleppt, d.h. sie laufen mit mehr oder weniger Widerstand leer, insbesondere ohne angetrieben zu sein. Erforderlichenfalls können diese Walzen auch mit steuerbarer Kraft gegeneinander gedrückt werden. In der Vorreckstrecke 4, in der der Filtertowstreifen 2 in Richtung schräg nach unten gefördert wird, wird das Filtertow vorgereckt.

Anschließend gelangt der Filtertowstreifen 2 in eine Reckstrecke 6, die zwischen einem Walzenpaar 24 und einem in Förderrichtung des Streifens 2 nachfolgenden Walzenpaar 39 gebildet wird. Die Walzenpaare 24 und 39 bilden somit die eigentliche Reckeinrichtung. Das Walzenpaar 24 wird durch die Walze 26, 27 gebildet. Das Walzenpaar 39 besteht aus den Walzen 41 und 42. Die Walzen 26 und 41 weisen eine starre gerillte Oberfläche auf, die jeweils eine nachgiebige Oberfläche der Walzen 27 bzw. 42 berühren. Die Umfangsgeschwindigkeiten der Walzen 41, 42 sind etwas größer als die Umfangsgeschwindigkeit der Walzen 26, 27, so dass das elastische Filtertow 2 definiert gereckt wird.

Dem Walzenpaar 39 ist ein weiteres Walzenpaar 43, bestehend aus einer motorisch angetriebenen Walze 46 und einer mitlaufenden Walze 44, nachgeordnet, deren Umfangsgeschwindigkeiten geringer sind als diejenigen der Walzen 41, 42, so dass der Filtertowstreifen 2 sich im Abschnitt zwischen dem Walzenpaar 39 und 43 leicht entspannt. Das Walzenpaar 43 weist eine Walze 44 mit starrer gerillter Oberfläche auf, die mit einer nachgiebigen Oberfläche der Walze 46 in Berührung steht. Somit begrenzen die Walzenpaare 39 und 43 die annähernd horizontal angeordnete Auftragsstrecke 7, der eine Auftragseinrichtung 47 in Form einer Besprühvorrichtung angeordnet ist. Die Besprühvorrichtung kann ausgebildet sein, wie in US-A-4 313 974 beschrieben, und besprüht von beiden Seiten den Filtertowstreifen mit feinen Tröpfchen eines Weichmachers für das Filtertowmaterial.

Anschließend wird der Filtertowstreifen 2 nach dem Walzenpaar 43 einer Raffeinrichtung zur Verringerung der Breite des Filtertows 2 zugeführt. Nach der Raffstrecke wird das Filtertow 2 über eine Umlenkrolle 49 nachfolgend einem Einlauf einer Filterstrangmaschine zugeführt. Für weitere Einzelheiten wird auf EP-B-0 654 224 verwiesen. Die Lager dieser Walzen, insbesondere der im Betrieb oder nicht im Betrieb der Maschine, zu der dieser Abschnitt der Filtertowaufbereitung gehört, nicht angetriebenen Walzen 21, 23, 26, 41 und 44, unterliegen einem Verschleiß und können entsprechend verdrecken, so dass schleichend und über lange Sicht Produktqualitätsbeeinträchtigungen auftreten können.

Um dieses zu vermeiden und rechtzeitig einen Lagertausch vornehmen zu können oder eine neue Walzenvorrichtung bzw. eine neue Walze einzubauen, wird erfindungsgemäß automatisch eine Überprüfung der Leichtgängigkeit bzw. des Drehwiderstands der Walze durchgeführt, und zwar insbesondere außerhalb des Betriebs der Maschine der Tabak verarbeitenden Industrie, in der die Walze angeordnet ist. Hierzu wird diese außerhalb des Betriebes aus deren Position, in der diese gegen die angetriebene Walze gedrückt ist, weggeschwenkt, so dass diese an sich frei rotieren könnte. Anschließend wird diese Walze (beispielsweise Walze 26 oder 41) und gegebenenfalls auch die angetriebene Walze 27, 42 bzw. 46 angetrieben, beispielsweise durch Druckluft, und insbesondere anhand der negativen Beschleunigung überprüft, wie schwergängig die Lager beispielsweise sind. Ab einer entsprechenden Schwergängigkeit bzw. ab einem vorgebbaren Drehwiderstand kann dann der Austausch der Lager bzw. der Walzen stattfinden.

Entsprechend werden außerhalb des Betriebs der Maschine eine Walze 22, 23 weggeschwenkt oder die Walzen 22, 23 des Walzenpaares 21 auseinander geschwenkt, so dass diese frei rotieren können. Es wird dann entsprechend geprüft, wie schwergängig die Lager sind oder ein Lager einer Walze ist.

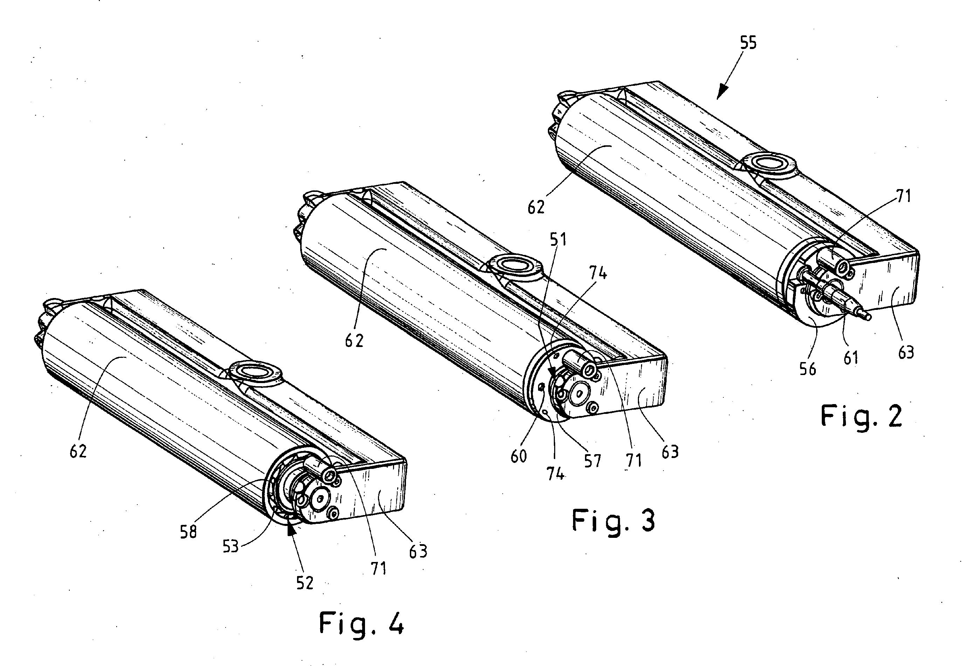

Eine erfindungsgemäße Walzenvorrichtung 55 ist in den Figuren 2, 3 und 4 schematisch dreidimensional dargestellt. Ein Drehteil 62 einer Walzenvorrichtung 55 ist über ein Lager 51 mit einer Halterung 63 verbunden. An der Stirnseite 52 der Walze 62 sind Einfräsungen 53 vorgenommen worden, die asymmetrisch ausgebildet sind und einen Luftwiderstand bilden können. Es ist ferner auch ein Stahlstift 58 in der Stirnseite 52 aufgenommen oder befestigt. Dieses ist entsprechend in Fig. 4 dargestellt.

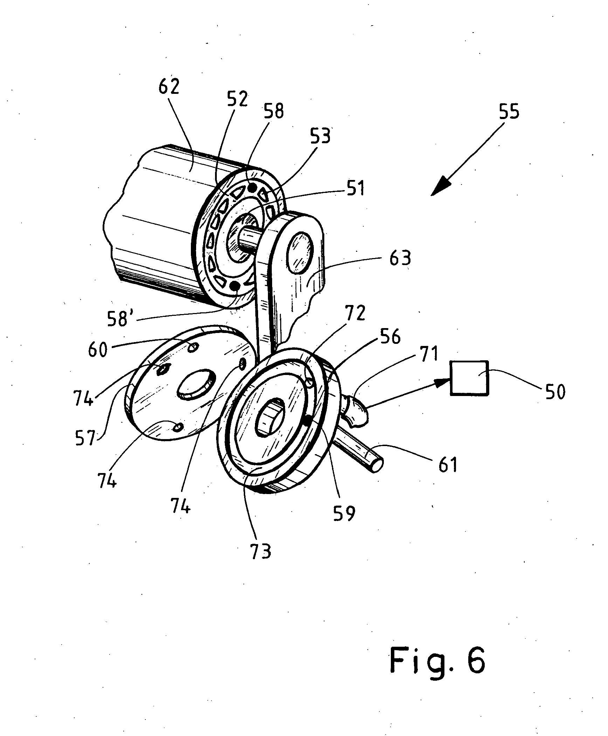

In Fig. 3 ist der Mittelring 57 auf die Halterung 63 aufgebracht. Der Mittelring 57 ist ortsstationär mit der Halterung 63 verbunden. Der Mittelring 57 weist eine Öffnung 60 auf, durch die der Messindikator bzw. ein Sensor durchgeführt werden kann. Außerdem sind drei Druckluftöffnungen 74 vorgesehen, von denen nur zwei in Fig. 3 erkennbar sind. Diese Druckluftöffnungen 74 sind schräg angeordnet, so dass Druckluft gegen den Uhrzeigersinn in Richtung Stirnseite 52 der Walze 62 durch die Druckluftöffnungen 74 des Mittelrings 57 strömen kann. Der Außenring 56 ist in Fig. 2 entsprechend an der Halterung 63 angebracht. Dieser wird mit einem Druckluftanschluss 71 verbunden, der Druckluft durch den Außenring 56 leitet, und zwar in einen Ringspalt, der in Fig. 6 genauer dargestellt ist. Es ist außerdem auch in Fig. 2 ein Messindikatoranschluss 61 dargestellt und ein entsprechend in die in Fig. 3 dargestellte Öffnung 60 eingebrachter Sensor.

Der in Fig. 6 dargestellte Ringspalt 73, der mit der Druckluftöffnung 72 kommuniziert, durch den über den Druckluftanschluss 71 Druckluft von dem Kompressor 50 in den Ringspalt 73 eingebracht werden kann, kommuniziert mit den schräg angeordneten Druckluftöffnungen 74, durch die Druckluft entsprechend schräg auf die Stirnseite 52 der Walze 62 strömen kann, um so auf die Luftwiderstandselemente 53 zu gelangen, wodurch die Walze 62 in Rotation versetzt wird. In Fig. 6 ist eine entsprechende Walzenvorrichtung 55 schematisch noch einmal dreidimensional dargestellt, wobei der Außenring 56 und der Mittelring 57 abmontiert dargestellt sind. Es ist außerdem noch ein weiterer Stahlstift 58' dargestellt, so dass in dieser Ausführungsform gemäß Fig. 6 zwei Stahlstifte zur Drehgeschwindigkeits-, Drehzahl- bzw. Beschleunigungsmessung vorgesehen sind. Es ist auch der Messindikator bzw. Sensor 59 angedeutet.

Um die Leichtgängigkeit bzw. den Drehwiderstand der Walze zu bestimmen, kann diese beispielsweise motorisch angetrieben werden und die Leistungsaufnahme des Motors bzw. der benötigte Strom, um eine Drehzahl zu erreichen, abgefragt werden.

Es kann auch während des Betriebs der entsprechenden Maschine der Tabak verarbeitenden Industrie der Drehwiderstand der Walzen bestimmt werden.

Bevorzugt ist es allerdings, die negative Beschleunigung und das Bremsverhalten der Walze nach einem Antreiben, beispielsweise durch Druckluft, zu bestimmen. Hierbei wird die Walze beispielsweise für einen vorgebbaren Zeitraum beschleunigt, um auf eine entsprechende Drehzahl zu kommen, und danach die Beschleunigung beendet, so dass das Bremsverhalten bzw. die negative Beschleunigung über eine Drehzahlmessung oder eine Rotationsgeschwindigkeitsmessung bestimmt werden kann.

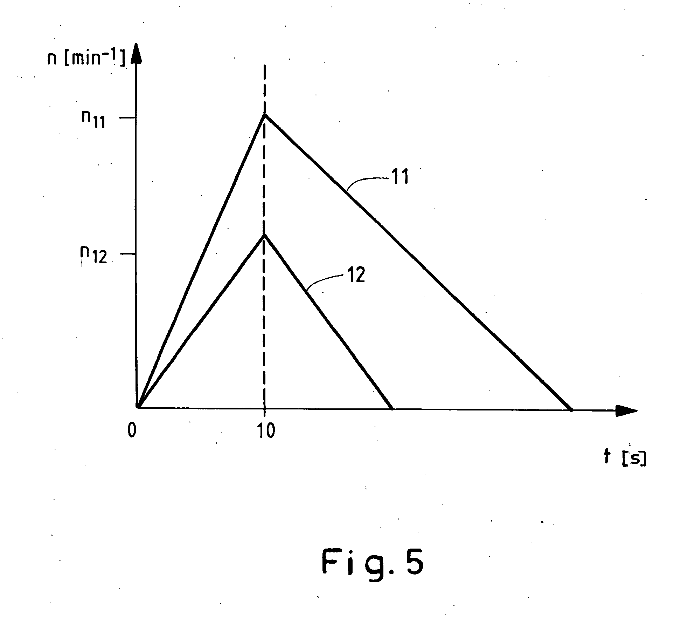

Hierzu ist beispielsweise in Fig. 5 eine entsprechende Messkurve dargestellt. Die Messkurve 11 entspricht einer Referenzkurve 11, bei der eine Walze gut freilaufend ist. In den ersten 10 Sekunden findet eine Beschleunigung statt. Hierbei ergibt sich dann eine maximale Drehzahl n₁₁. Nach Beenden der Beschleunigung durch beispielsweise einen Antrieb mittels Druckluft reduziert sich die Drehzahl kontinuierlich gemäß Kurve 11. Bei einer Walze, dessen Lager stark verschlissen ist, erreicht diese Walze nach einer Beschleunigungszeit von 10 Sekunden nur die Drehzahl n₁₂. Auch das Abbremsen ist gemäß Kurve 12 deutlich stärker im Vergleich zur Kurve 11. Um entsprechende Messfehler zu vermeiden, wird bevorzugt dieser Messvorgang zweimal durchgeführt, d.h. die Walzen werden zweimal beschleunigt und zweimal wird eine entsprechende Drehzahlmessung durchgeführt.

Vorzugsweise geschieht der Antrieb der Walzen pneumatisch. Hierzu werden auf der Stirnseite eines bevorzugterweise aus Aluminium bestehenden Grundkörpers einer gummierten Walze Einfräsungen ausgeführt, die turbinenartig ausgestaltet sind. Beispielsweise können diese Einfräsungen mit zylindrischen Fräsern durchgeführt werden, die unter einem Winkel von 30° die Einfräsungen fertigen. Die in Fig. 6 und auch in Fig. 3 dargestellten Druckluftöffnungen 74 können auch mit einem Winkel von 30° gebohrt sein. Diese werden über einen Luftringspalt 73 mit Druckluft versorgt. Der Außenring 56 und der Mittelring 57 werden über zwei Gewindestifte auf die Achse geklemmt oder direkt mit der Halterung 63 verbunden. Wird das System unter Druckluft gesetzt, was über die Maschinensteuerung möglich ist, treiben die drei Luftaustritte 74 über die Einfräsungen 53 die Walze an. Nach beispielsweise ca. 10 Sekunden hat die Walze ihre Endgeschwindigkeit erreicht. Die Zeit bis zum Erreichen der Endgeschwindigkeit hängt insbesondere von der Größe und der Masse der Walze ab. Wird nun Druckluft abgeschaltet, läuft die Walze über die normale negative Beschleunigung linear aus.

Über zwei Metallstifte, die auch in dem Aluminiumgrundkörper integriert sein können, erkennt der Initiator die Impulse, die jeweils erzeugt werden. Es kann dann über eine Software und entsprechend festgelegte Grenzwerte unterschieden werden, ob es sich um ein normales Auslaufen oder um einen durch Verschmutzung oder Beschädigung zusätzlich gebremsten Zustand des Lagers handelt.

Der verwendete Druckluftimpuls hat zusätzlich eine Reinigungswirkung, falls sich Acetatfasern in den Ringspalt zwischen den Mittelring 57 und die Stirnseite 52, 52' der Walze setzen sollten.

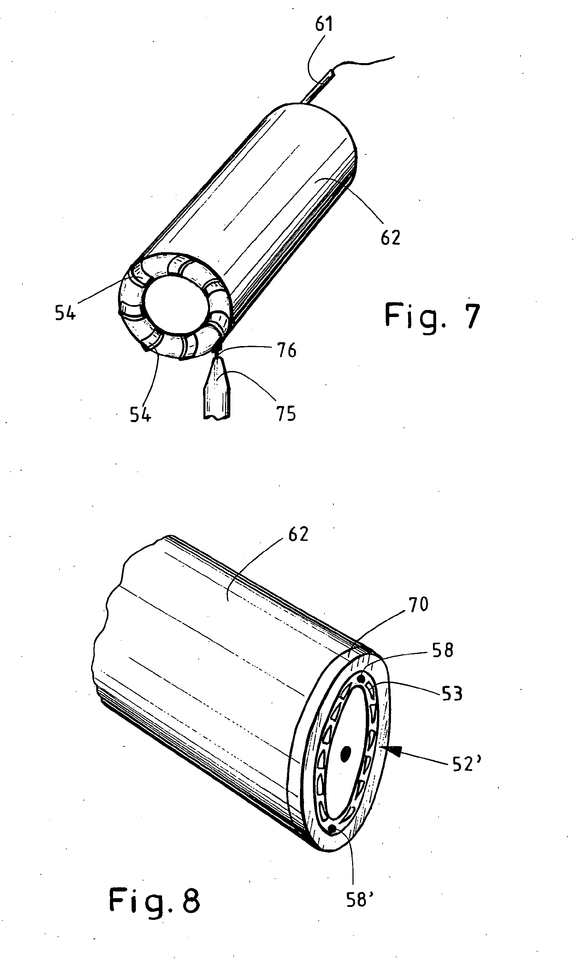

Bei einer Stahlwalze ist üblicherweise schon ein Initiator an einer der beiden Stirnseiten vorhanden, der während der Produktion die Geschwindigkeit der Walze, insbesondere der Bremswalze, aufnimmt. Dieser kann auch zur Überprüfung des Abbremsverhaltens genutzt werden. Der Antrieb über Druckluft wird dann allerdings vorzugweise auf der Vorderseite der Walze realisiert. Hierbei wird dann ein zusätzlicher Ring 70 verwendet, der beispielsweise aus Aluminium gefertigt sein kann und an die Stahlwalze 62 gemäß Fig. 8 angebracht wird. Der Ring 70 weist dann die Einfräsungen 53 auf, und zwar auf dessen Stirnseite 52'. Auch an dieser Stelle können dann Stahlstifte 58 und 58' in den zusätzlichen Ring 70 eingebracht werden.

Alternativ können an der Stirnseite 52 der Walze 62 gemäß Fig. 7 Flügel 54 angeordnet sein, die mittels Druckluft 76 aus einer Druckluftdüse 75 die Walze 62 zur Rotation anregen. In diesem Fall ist ein Initiator 61 auf der nicht dargestellten Rückseite der Walze 62 vorgesehen, der dann die Drehzahl oder die Rotationsgeschwindigkeit der Walze 62 aufnimmt.

### Bezugszeichenliste

- 1: Ballen
- 2: Filtertowstreifen
- 3: Abzugstrecke
- 4: Vorreckstrecke
- 5: Pfeil
- 6: Reckstrecke
- 7: Auftragsstrecke
- 11: Referenzkurve
- 12: Messkurve
- 18: Umlenkrolle
- 21: Walzenpaar
- 22: Walze
- 23: Walze
- 24: Walzenpaar
- 26: Walze
- 27: Walze
- 39: Walzenpaar
- 41: Walze
- 42: Walze
- 43: Walzenpaar
- 44: Walze
- 46: Walze
- 47: Auftrageinrichtung
- 49: Umlenkrolle
- 50: Kompressor
- 51: Lager
- 52, 52': Stirnseite
- 53: Einfräsung
- 54: Flügel
- 55: Walzenvorrichtung
- 56: Außenring
- 57: Mittelring
- 58, 58': Stahlstift
- 59: Messindikator
- 60: Öffnung
- 61: Messindikatoranschluss
- 62: Walze
- 63: Halterung
- 70: Ring
- 71: Druckluftanschluss
- 72: Druckluftöffnung
- 73: Ringspalt
- 74: Druckluftöffnung
- 75: Druckluftdüse
- 76: Druckluft

## Patentansprüche

1. Verfahren zum Prüfen des Rotationsverhaltens einer Walze (21, 22, 26, 27, 41, 42, 44, 46, 49) einer Maschine der Tabak verarbeitenden Industrie, wobei während der Rotation der Walze (21, 22, 26, 27, 41, 42, 44, 46, 49) über einen vorgebbaren Zeitraum kontinuierlich oder in vorbestimmten Zeitabschnitten eine zeitabhängige physikalische Größe (n, 12) ermittelt wird und mit wenigstens einem Referenzwert (11) verglichen wird, wobei in Abhängigkeit des Vergleichs der Betriebszustand der Walze (21, 22, 26, 27, 41, 42, 44, 46, 49) für den Betrieb der Maschine bestimmt wird.

2. Verfahren nach Anspruch 1, **dadurch gekennzeichnet, dass** der Betriebszustand der Walze (21, 22, 26, 27, 41, 42, 44, 46, 49) automatisch, insbesondere außerhalb des Produktionsbetriebs der Maschine, bestimmt wird.

3. Verfahren nach Anspruch 1 oder 2, **dadurch gekennzeichnet, dass** die physikalische Größe (n, 12) eine positive Beschleunigung, insbesondere beim Hochfahren der Walze (21, 22, 26, 27, 41, 42, 44, 46, 49) auf eine vorgebbare Rotationsgeschwindigkeit, eine negative Beschleunigung beim Abbremsen der Walze (21, 22, 26, 27, 41, 42, 44, 46, 49) und/oder ein Leistungseintrag eines die Walze (21, 22, 26, 27, 41, 42, 44, 46, 49) antreibenden Organs (50) beim Beschleunigen auf eine vorgebbare Drehzahl (n) oder beim Aufrechterhalten einer vorgebbaren Drehzahl (n) ist.

4. Verfahren nach einem der Ansprüche 1 bis 3, **dadurch gekennzeichnet, dass** die Walze (21, 22, 26, 27, 41, 42, 44, 46, 49) durch einen Luftstrom (76) in Rotation versetzt wird, wobei insbesondere der Luftstrom (76) auf, insbesondere an einer Stirnseite (52) der Walze (21, 22, 26, 27, 41, 42, 44, 46, 49) an- oder eingebrachte, Luftwiderstandselemente (53, 54), insbesondere Flügelelemente (54) oder Einfräsungen (53), wirkt.

5. Verfahren nach einem der Ansprüche 1 bis 4, **dadurch gekennzeichnet, dass** die Walze (21, 22, 26, 27, 41, 42, 44, 46, 49) eine, insbesondere freidrehende, Bremswalze (26, 27), insbesondere einer Filtermaterialaufbereitungsvorrichtung, ist.

6. Walzenvorrichtung (55) einer Maschine der Tabak verarbeitenden Industrie, wobei zur Prüfung des Rotationsverhaltens einer Walze (21, 22, 26, 27, 41, 42, 44, 46, 49) der Walzenvorrichtung (55) eine die Walze antreibende Vorrichtung (50, 56, 57) vorgesehen ist und wobei eine Messvorrichtung (58, 59, 60) vorgesehen ist, die während der Rotation der Walze (21, 22, 26, 27, 41, 42, 44, 46, 49) über einen vorgebbaren Zeitraum kontinuierlich oder in vorbestimmten Zeitabschnitten eine zeitabhängige physikalische Größe (n, 12) ermittelt, wobei aufgrund des ermittelten Werts (n, 12) oder der ermittelten Werte (n,12) ein Betriebszustand, insbesondere ein Drehwiderstand, der Walze (21, 22, 26, 27, 41, 42, 44, 46, 49) bestimmt wird.

7. Walzenvorrichtung (55) nach Anspruch 6, **dadurch gekennzeichnet, dass** die die Walze (21, 22, 26, 27, 41, 42, 44, 46, 49) antreibende Vorrichtung (50, 56, 57) einen Luftstrom auf die Walze (21, 22, 26, 27, 41, 42, 44, 46, 49), insbesondere auf eine Stirnseite (52) der Walze (21, 22, 26, 27, 41, 42, 44, 46, 49), richtet.

8. Walzenvorrichtung (55) nach Anspruch 6 oder 7, **dadurch gekennzeichnet, dass** zur Ermittlung der zeitabhängigen physikalischen Größe (n, 12) ein Drehzahlsensor (58, 59, 60) oder ein Beschleunigungssensor vorgesehen ist.

9. Walze (21, 22, 26, 27, 41, 42, 44, 46, 49) zur Verwendung in einer Walzenvorrichtung (55) nach einem der Ansprüche 6 bis 8 mit wenigstens einem Luftwiderstandselement (53, 54).

10. Walze (21, 22, 26, 27, 41, 42, 44, 46, 49) nach Anspruch 9,
**dadurch gekennzeichnet, dass** das Luftwiderstandselement (53, 54) als Flügel (54) oder als, insbesondere asymmetrische, Einfräsung (53) ausgebildet ist.

11. Walze (21, 22, 26, 27, 41, 42, 44, 46, 49) nach Anspruch 10, **dadurch gekennzeichnet, dass** die Einfräsung (53) auf einer Stirnseite (52) der Walze (21, 22, 26, 27, 41, 42, 44, 46, 49) oder einer Stirnseite (52') eines mit der Walze (26, 27, 41, 42, 44, 46, 49) verbindbaren Rings (70) angeordnet ist.

12. Walze (21, 22, 26, 27, 41, 42, 44, 46, 49) nach einem der Ansprüche 9 bis 11, **dadurch gekennzeichnet, dass** ein Signalgeber (58, 58') vorgesehen ist.

13. Walze (21, 22, 26, 27, 41, 42, 44, 46, 49) nach einem der Ansprüche 9 bis 12, **dadurch gekennzeichnet, dass** die Walze (21, 22, 26, 27, 41, 42, 44, 46, 49) eine Bremswalze (26, 27), insbesondere eines Bremswalzenpaars, einer Filtermaterialaufbereitungsvorrichtung ist.

14. An einem drehbaren Teil (62) einer Walze (21, 22, 26, 27, 41, 42, 44, 46, 49) nach einem der Ansprüche 9 bis 13 anbringbarer Ring (70) mit wenigstens einem Luftwiderstandselement (53, 54).

15. An die Halterung (63) einer Walze (21, 22, 26, 27, 41, 42, 44, 46, 49) nach einem der Ansprüche 9 bis 13 anbringbarer Ring (46) mit einem Druckluftanschluss (71), der insbesondere mit einem Ringspalt (73), der im Ring (56) angeordnet ist, kommuniziert.
